# EUROPÄISCHE PATENTSCHRIFT

(11) **EP 2 027 462 B1**
(45) Veröffentlichungstag und Bekanntmachung des Hinweises auf die Patenterteilung: **28.03.2012**
(21) Anmeldenummer: 07722425.1
(22) Anmeldetag: 14.05.2007
(51) Int. Cl.: G01N 30/42, B01D 15/18

(54) **KONTINUIERLICHE GEGENSTROM CHROMATOGRAPHIE ANLAGE**
CONTINUOUS COUNTERCURRENT CHROMATOGRAPHY UNIT
INSTALLATION DE CHROMATOGRAPHIE À CONTRE-COURANT EN CONTINU

(30) Priorität: 15.06.2006 DE 102006028129
(43) Veröffentlichungstag der Anmeldung: 25.02.2009
(73) Patentinhaber: Pfeiffer, Nikolaus Stephan, 89129 Langenau (DE)
(72) Erfinder: Pfeiffer, Nikolaus Stephan, 89129 Langenau (DE)
(74) Vertreter: Meyer, Thorsten
(86) Internationale Anmeldenummer: PCT/DE2007/000877
(87) Internationale Veröffentlichungsnummer: WO 2007/143963

(56) Entgegenhaltungen:
- WO-A-01/37959
- WO-A-2004/079363
- MURAYAMA W ET AL: "A new centrifugal counter-current chromatograph and its application" JOURNAL OF CHROMATOGRAPHY, ELSEVIER SCIENCE PUBLISHERS B.V. AMSTERDAM, NL, Bd. 239, 30. April 1982 (1982-04-30), Seiten 643-649, XP002336797 ISSN: 0021-9673
- DELANNAY ET AL: "Multiple dual-mode centrifugal partition chromatography, a semi-continuous development mode for routine laboratory-scale purifications" JOURNAL OF CHROMATOGRAPHY, ELSEVIER SCIENCE PUBLISHERS B.V. AMSTERDAM, NL, Bd. 1127, Nr. 1-2, 15. September 2006 (2006-09-15), Seiten 45-51, XP005621076 ISSN: 0021-9673
- MARCHAL LUC ET AL: "Centrifugal partition chromatography: a survey of its history, and our recent advances in the field." CHEMICAL RECORD (NEW YORK, N.Y.) 2003, Bd. 3, Nr. 3, 2003, Seiten 133-143, XP002452497 ISSN: 1527-8999

## Beschreibung

Die Erfindung betrifft eine kontinuierliche Gegenstrom Chromatographie Anlage zur Trennung und/der Reinigung von Substanzen nach dem Prinzip der flüssig-flüssig Verteilung.

Das Prinzip der flüssig-flüssig Verteilung existiert bereits viele Jahre, allerdings handelt es sich hierbei um Batchbetrieb, d.h. es kann nur eine kleine Probenmenge aufgegeben werden. Diese muss den gesamten Prozess durchlaufen, erst dann kann die nächste Probenmenge aufgegeben werden. Eine solche Anordnung ist aus der WO 2004/079363 A bekannt, wobei eine Phase durch mehrere auf einem Zylinderumfang rotierende Kammern geführt ist.

Aufgabe der Erfindung ist es eine gegenüber dem Stand der Technik verbesserte Chromatographie Anlage zur Verfügung zu stellen, die eine effiziente, kontinuierliche Stoffauftrennung ermöglicht.

Diese Aufgabe wird durch eine kontinuierliche Gegenstrom Chromatographie Anlage nach den Merkmalen des Anspruchs 1 gelöst.

Erfindungsgemäß ist eine kontinuierliche Gegenstrom Chromatographie Anlage vorgeschlagen, mit mehreren um eine Drehachse angeordneten rotierenden Kammern, wobei die Kammern zur Aufnahme für eine zu untersuchende Flüssigkeit oder ein Flüssigkeitsgemisch vorgesehen sind, wobei die einzelnen Kammern über Flüssigkeits-leitende Verbindungen miteinander dergestalt verbunden sind, dass zwei Flüssigkeiten im Gegenstromprinzip geführt sind, wobei eine Flüssigkeit nach durchfließen einiger Kammern in davor befindliche Kammern zurückgeführt wird um den Gleichstrom in den Kammern zu erreichen.

Die vorgeschlagene kontinuierliche Gegenstrom Chromatographie Anlage kennzeichnet sich dabei dadurch aus, dass sie eine gute Trennschärfe als auch eine gute Produktivität für eine effiziente Durch- und wieder Entmischung der Phasen erreicht.

Die Probensubstanz, die den Flüssigkeiten zugeführt ist, wird so optimal nach deren Löslichkeit aufgetrennt. Die Probensubstanz kann dabei selbstverständlich auch eine Gemisch von verschiedenen Stoffen sein. Gegenüber dem Stand der Technik ist so erstmals eine teilweise Rückführung der Probe, während der Prozess läuft, vorgesehen.

Nach einer besonders bevorzugten Ausgestaltung der Erfindung ist vorgesehen, dass den Kammern an einer Drehachsen-nahen Seite einer Kammer ein Flüssigkeitsgemisch zugeführt wird, das an einer entgegen der Rotationsrichtung benachbart liegenden Kammer an deren Drehachsen-fernen Seite entnommen wird.

Gemäß einer ebenso besonders bevorzugten Ausgestaltung der Erfindung ist vorgesehen, dass Kammern einer ersten Gruppe an einer Drehachsen-fernen Seite ein Flüssigkeitsgemisch zugeführt wird, das an einer in der Rotationsrichtung übernächsten liegenden Kammer an deren Drehachsen-nahen Seite entnommen wird.

Nach einer weiteren besonders bevorzugten Ausgestaltung der Erfindung ist vorgesehen, dass Kammern einer zweiten Gruppe an einer Drehachsen-fernen Seite ein Flüssigkeitsgemisch zugeführt wird, das an entgegen der Rotationsrichtung benachbart liegenden Kammer an deren Drehachsen-nahen Seite entnommen wird.

Von Vorteil ist vorgesehen, dass die Stellen der Entnahme und die Stellen der Zuführung einer Kammer jeweils auf einer Radialen liegen.

Nach einer Weiterbildung ist vorgesehen, dass die beiden Flüssigkeiten bzw. die Flüssigkeitsgemische zum einen eine schwere Phase und zum anderen eine leichte Phase sind.

Von Vorteil sind die Kammern miteinander zu einem unterbrochenen Ring verbunden.

Die beiden Flüssigkeiten werden von Vorteil kontinuierlich an jeweils einem Zugang zu den miteinander verbundenen Kammern zugeführt.

Nach einer besonders vorteilhaften Fortbildung der Erfindung ist vorgesehen, dass eine Probensubstanz zwischen diesen Zugängen an einem anderen Punkt der eine Kette bildenden verbundenen Kammern zugeführt wird.

Nach einer Variante ist vorgeschlagen, dass die Flüssigkeiten nicht mischbar sind.

Die Flüssigkeit oder das Flüssigkeitsgemisch ist bevorzugterweise ein Lösungsmittel oder Lösungsmittelgemisch für die Probensubstanz.

Für eine besonders effektiven Aufbau ist vorgesehen, dass die Kammern auf einer Kreisbahn angeordnet sind.

Von Vorteil sind die Kammern identisch aufgebaut.

Nachfolgend wird die Erfindung anhand der Zeichnungen weiter erläutert. Im Einzelnen zeigt die schematische Darstellung in:
- Fig. 1: eine schematische Aufsicht auf eine erfindungsgemäße Kontinuierliche Gegenstrom Chromatographie Anlage,
- Fig. 2: eine schematische Darstellung dreier exemplarischer Kammern, wobei die Durchströmung erläuternd dargestellt ist, und
- Fig. 3: eine schematische Darstellung des Ergebnisses einer Auftrennung der Phasen der drei Kammern aus Fig. 2, die durch das Durchlaufen der Kammern von links nach rechts erreicht wird.

Die in den Figuren gleichen Bezugsziffern bezeichnen gleiche oder gleich wirkende Elemente.

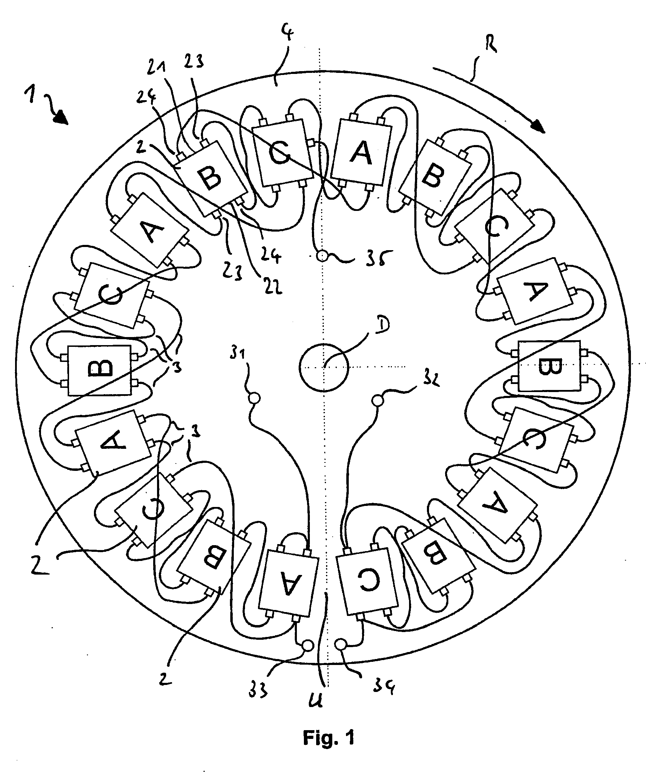

Fig. 1 zeigt eine schematische Ansicht einer erfindungsgemäßein kontinuierlichen Gegenstrom Chromatographie Anlage 1 mit mehreren um eine Drehachse D angeordneten in Richtung R rotierenden Kammern 2. Die Kammern sind über Flüssigkeits-leitende Verbindungen 3 miteinander verbunden.

Durch die verbundenen Kammern 2 strömt eine zu untersuchende Flüssigkeit oder ein Flüssigkeitsgemisch.

Durch die Leitungsführung im Gegenstromprinzip wird die Flüssigkeit nach Durchfließen einiger Kammern in davor befindliche Kammern zurückgeführt, wodurch ein Gleichstrom in den Kammern erreicht wird.

Die Kammern 2 sind auf einer Kreisbahn auf einer um die Drehachse D rotierenden Trägerplatte 4 angeordnet, wobei die Kammern 2 miteinander zu einem unterbrochenen Ring durch die Leitungen 3 verbunden sind.

Die Stellen der Entnahme 23 und die Stellen der Zuführung 24 einer Kammer jeweils auf einer Radialen bezüglich deren Anordnung um die Drehachse D liegen.

An der Unterbrechung U des Rings werden die beiden Flüssigkeiten kontinuierlich an jeweils einem Zugang 31, 32, 33, 34 zu den miteinander verbundenen Kammern zugeführt, und die getrennten Flüssigkeiten entnommen.

Die Flüssigkeit bzw. Flüssigkeitsgemisch selber ist ein Lösungsmittel für die Probensubstanz. Diese wird zwischen diesen Zugängen an einem Einspeisezugang 35 der eine Kette bildenden verbundenen Kammern 2 zugeführt wird.

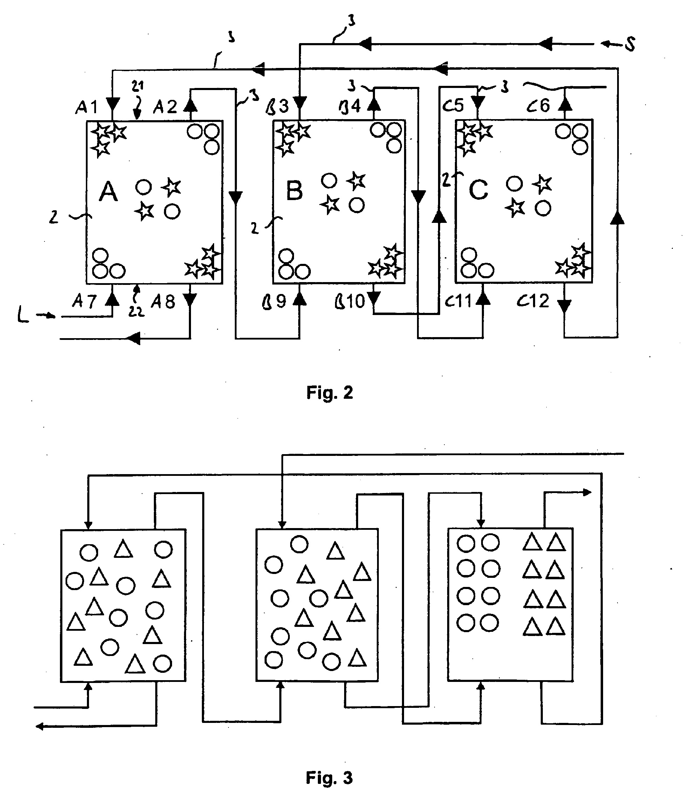

Fig. 2 zeigt in einer weiter schematisierten Darstellung, wie die Flüssigkeitsführung vollzogen wird. Den Kammern A; B; C wird an einer Drehachsen-nahen Seite 22 einer Kammer B; C; A ein Flüssigkeitsgemisch zugeführt, das an einer entgegen der Rotationsrichtung benachbart liegenden Kammer A; B; C an deren Drehachsen-fernen Seite 21 entnommen wird.

Den Kammern A; B (erste Gruppe) wird an einer Drehachsen-fernen 21 Seite ein Flüssigkeitsgemisch zugeführt, das an einer in der Rotationsrichtung übernächsten liegenden Kammer C; A an deren Drehachsen-nahen 22 Seite entnommen wird.

Den Kammern C (zweite Gruppe) wird an einer Drehachsen-fernen Seite 21 ein Flüssigkeitsgemisch zugeführt, das an entgegen der Rotationsrichtung benachbart liegenden Kammer (B) an deren Drehachsen-nahen Seite 22 entnommen wird.

Die beiden Flüssigkeiten bzw. die Flüssigkeitsgemische sind zum einen eine schwere Phase und zum anderen eine leichte Phase. Dies verbessert die Auftrennung der Probensubstanz.

Eine Phase L wird über Anschluss A7 in Kammer A geführt, über Anschluss A2 und B9 in Kammer B, über Anschluss B4 und C11 in Kammer C.

Über Anschluss C6 wird dann Phase L in Kammer A des Anschlusses A7 des rechten benachbarten Blockes aus weitren Kammern A, B, C (nicht dargestellt) geführt .

Phase S wird von einem entsprechenden Anschluss A8 der Kammer A des benachbarten Blockes (nicht dargestellt) an Kammer B des Anschlusses B3 geführt.

Über Anschluss B10 und C5 in Kammer C des Anschlusses C11, von dort über Anschluss C12 und A1 in Kammer A. Von dort wird Phase S über Anschluss A8 zu Anschluss B3 des linken Blockes (nicht dargestellt) B geführt.

Durch die Vielzahl miteinander verbundener Kammern werden zwei insbesondere nicht mischbare Flüssigkeiten im Gegenstromprinzip geführt. In den Kammern findet eine Durchmischung der Phasen und damit eine Verteilung einer dritten Probensubstanz nach ihrer Löslichkeit in den jeweiligen Phasen statt. Dabei kommt das Scheidetrichterprinzip, und die Nernst'sche Verteilung zum Einsatz.

Durch die aufgezwungene Rotation wird in den Kammern eine Fliehkraft erzeugt, wodurch in der gleichen Kammer eine Trennung der Phasen erreicht wird, die Phasen können getrennt in die nächste Kammer geführt werden.

Da im Gegenstromprinzip die schnelle Durch- und Entmischung und damit das definierte weiterführen der jeweils reinen Phasen L und S nicht realisierbar ist, werden in den einzelnen Kammern die Phasen im Kreuzstrom geführt. Diese Kammern werden über eine spezielle Verbindungsführung zu Blöcken (z.B. Kammer A, B und C) zusammengefasst, in diesen Blöcken werden die Phasen im Gleichstromprinzip geführt. Der Gegenstromprozess wird durch die Führung der Verbindungen zwischen den einzelnen Blöcken erreicht.

In Fig. 3 ist schematisch das Ergebnis einer Auftrennung der Phasen gezeigt, die durch das Durchlaufen der Kammern von links nach rechts erreicht wird.

### Bezugszeichenliste

- 1: Chromatographie Anlage
- 2: Kammer
- 21: Drehachsen-fernen Seite
- 22: Drehachsen-nahen Seite
- 23: Stelle der Entnahme
- 24: Stelle der Zuführung
- 3: Flüssigkeits-leitende Verbindung
- 31: Zugang
- 32: Zugang
- 33: Zugang
- 34: Zugang
- 35: Einspeisezugang
- 4: Trägerplatte

- A1, A2, A7, A8: Anschluss
- B3, B4, B9, B10: Anschluss
- C5, C6, C11, C12: Anschluss

- D: Drehachse
- U: Unterbrechung
- R: Rotation

## Patentansprüche

1. Kontinuierliche Gegenstrom Chromatographie Anlage (1) mit mehreren um eine Drehachse (D) angeordneten rotierenden Kammern (2, A, B, C), wobei die Kammern zur Aufnahme für eine zu untersuchende Flüssigkeit oder ein Flüssigkeitsgemisch vorgesehen sind, wobei die einzelnen Kammern über Flüssigkeits-leitende Verbindungen (3) miteinander dergestalt verbunden sind, dass zwei Flüssigkeiten im Gegenstromprinzip geführt sind, wobei eine Flüssigkeit nach Durchfließen einiger Kammern in in Stromrichtung zuerst durchflossene Kammern zurückgeführt wird.

2. Kontinuierliche Gegenstrom Chromatographie Anlage nach Anspruch 1,
**dadurch gekennzeichnet,**
**dass** den Kammern (A; B; C) an einer Drehachsen-nahen Seite (22) einer Kammer (B; C; A) ein Flüssigkeitsgemisch zugeführt wird, das an einer entgegen der Rotationsrichtung benachbart liegenden Kammer (A; B; C) an deren Drehachsen-fernen Seite (21) entnommen wird.

3. Kontinuierliche Gegenstrom Chromatographie Anlage nach Anspruch 1 oder 2,
**dadurch gekennzeichnet,**
**dass** Kammern (A; B) einer ersten Gruppe an einer Drehachsen-fernen Seite (21) ein Flüssigkeitsgemisch zugeführt wird, das an einer in der Rotationsrichtung übernächsten liegenden Kammer (C; A) an deren Drehachsen-nahen Seite (22) entnommen wird.

4. Kontinuierliche Gegenstrom Chromatographie Anlage nach einem der Ansprüche 1 bis 3,
**dadurch gekennzeichnet,**
**dass** Kammern (C) einer zweiten Gruppe an einer Drehachsen-fernen Seite (21) ein Flüssigkeitsgemisch zugeführt wird, das an entgegen der Rotationsrichtung benachbart liegenden Kammer (B) an deren Drehachsen-nahen Seite (22) entnommen wird.

5. Kontinuierliche Gegenstrom Chromatographie Anlage nach einem der vorhergehenden Ansprüche,
**dadurch gekennzeichnet,**
**dass** die Stellen der Entnahme (23) und die Stellen der Zuführung (24) einer Kammer (2) jeweils auf einer Radialen bezüglich der Rotationsachse (D) liegen.

6. Kontinuierliche Gegenstrom Chromatographie Anlage nach einem der vorhergehenden Ansprüche,
**dadurch gekennzeichnet,**
**dass** die beiden Flüssigkeiten bzw. die Flüssigkeitsgemische zum einen eine schwere Phase und zum anderen eine leichte Phase sind.

7. Kontinuierliche Gegenstrom Chromatographie Anlage nach einem der vorhergehenden Ansprüche,
**dadurch gekennzeichnet,**
**dass** die Kammern (2) miteinander zu einem unterbrochenen Ring verbunden sind.

8. Kontinuierliche Gegenstrom Chromatographie Anlage nach einem der vorhergehenden Ansprüche,
**dadurch gekennzeichnet**,
die beiden Flüssigkeiten kontinuierlich an jeweils einem Zugang (31, 32, 33, 34) zu den miteinander verbundenen Kammern (2) zugeführt werden.

9. Kontinuierliche Gegenstrom Chromatographie Anlage nach Anspruch 8,
**dadurch gekennzeichnet,**
**dass** eine Probensubstanz zwischen diesen Zugängen an einem anderen Punkt (35) der eine Kette bildenden verbundenen Kammern (2) zugeführt wird.

10. Kontinuierliche Gegenstrom Chromatographie Anlage nach einem der vorhergehenden Ansprüche,
**dadurch gekennzeichnet,**
**dass** die Flüssigkeiten nicht mischbar sind.

11. Kontinuierliche Gegenstrom Chromatographie Anlage nach einer der Ansprüche 9 oder 10,
**dadurch gekennzeichnet,**
**dass** die Flüssigkeit oder das Flüssigkeitsgemisch ein Lösungsmittel oder Lösungsmittelgemisch für die Probensubstanz sind.

12. Kontinuierliche Gegenstrom Chromatographie Anlage nach einer der vorhergehenden Ansprüche,
**dadurch gekennzeichnet,**
**dass** die Kammern (2) auf einer Kreisbahn angeordnet sind.

13. Kontinuierliche Gegenstrom Chromatographie Anlage nach einer der vorhergehenden Ansprüche,
**dadurch gekennzeichnet,**
**dass** die Kammern identisch aufgebaut sind.

## Claims

1. A continuous countercurrent chromatography system (1) with several rotating chambers (2, A, B, C) arranged around a rotational axis (D), wherein the chambers are provided for receiving a liquid or liquid mixture to be examined, and the individual chambers are interconnected via liquid carrying connections (3) in such a way as to relay two liquids in countercurrent, wherein one liquid first passes through several chambers and is then returned to the chambers first traversed in the direction of flow.

2. A continuous countercurrent chromatography system according to claim 1, **characterized in that** a liquid mixture is supplied to the chambers (A; B; C) on a side (22) of a chamber (B; C; A) near the rotational axes, after removed at a chamber (A; B; C) lying adjacently opposite the rotational direction on its side (21) remote from the rotational axes.

3. A continuous countercurrent chromatography system according to claim 1 or 2, **characterized in that** a liquid mixture is supplied to chambers (A; B) of a first group at a side (21) remote from the rotational axes, after removed at a next but one chamber (C; A) in the rotational direction at its side (22) near the rotational axes.

4. A continuous countercurrent chromatography system according to one of claims 1 to 3, **characterized in that** a liquid mixture is supplied to chambers (C) of a second group at a side (21) remote from the rotational axes, after removed at a chamber (B) lying adjacently opposite the rotational direction on its side (22) near the rotational axes.

5. A continuous countercurrent chromatography system according to one of the preceding claims, **characterized in that** the removal sites (23) and supply sites (24) of a chamber (2) each lie on a radial relative to the rotational axis (D).

6. A continuous countercurrent chromatography system according to one of the preceding claims, **characterized in that** the two liquids or liquid mixtures consist of a heavy phase on the one hand and a light phase on the other.

7. A continuous countercurrent chromatography system according to one of the preceding claims, **characterized in that** the chambers (2) are interconnected to form an uninterrupted ring.

8. A continuous countercurrent chromatography system according to one of the preceding claims, **characterized in that** the two liquids are continuously supplied to a respective inlet (31, 32, 33, 34) to the interconnected chambers (2).

9. A continuous countercurrent chromatography system according to claim 8, **characterized in that** a sample substance is supplied between these access sites at another point (35) of the interconnected chambers (2) forming a chain.

10. A continuous countercurrent chromatography system according to one of the preceding claims, **characterized in that** the liquids are immiscible.

11. A continuous countercurrent chromatography system according to claim 9 or 10, **characterized in that** the liquid or liquid mixture consists of a solvent or solvent mixture for the sample substance.

12. A continuous countercurrent chromatography system according to one of the preceding claims, **characterized in that** the chambers (2) are arranged in a circle.

13. A continuous countercurrent chromatography system according to one of the preceding claims, **characterized in that** the chambers have an identical structural design.

## Revendications

1. Installation de chromatographie (1) continue à contre-courant comprenant une ou plusieurs chambres (2, A, B, C) tournantes disposées sur un axe de rotation (D), sachant que les chambres sont prévues pour recevoir un liquide ou un mélange de liquides à analyser, sachant que les différentes chambres sont reliées l'une à la suivante par des raccordements (3) conduisant du liquide de telle manière que deux liquides peuvent être dirigés selon le principe du contre-courant, sachant qu'un liquide est redirigé vers les chambres traversées en premier, après avoir traversé quelques chambres, dans le sens d'écoulement.

2. Installation de chromatographie continue à contre-courant selon la revendication 1, **caractérisée en ce qu'**un mélange de liquides est amené vers des chambres (A ; B ; C), sur un côté (22) d'une chambre (B ; C ; A) proche de l'axe de rotation, lequel mélange est prélevé sur une chambre (A ; B ; C) placée à proximité, inversement au sens de rotation, sur son côté (21) éloigné de l'axe de rotation.

3. Installation de chromatographie continue à contre-courant selon la revendication 1 ou 2, **caractérisée en ce qu'**un mélange de liquides est amené vers des chambres (A ; B) d'un premier groupe sur un côté (21) éloigné de l'axe de rotation, lequel mélange est prélevé sur une chambre (C ; A) placée après la suivante dans le sens de rotation, sur son côté (22) proche de l'axe de rotation.

4. Installation de chromatographie continue à contre-courant selon l'une des revendications 1 à 3, **caractérisée en ce qu'**un mélange de liquides est amené vers des chambres (C) d'un second groupe sur un côté (21) éloigné de l'axe de rotation, lequel mélange est prélevé sur une chambre (B) placée à proximité, inversement au sens de rotation, sur son côté (22) proche de l'axe de rotation.

5. Installation de chromatographie continue à contre-courant selon l'une des revendications précédentes, **caractérisée en ce que** les points de prélèvement (23) et les points d'amenée (24) d'une chambre (2) sont placés respectivement sur une radiale par rapport à l'axe de rotation (D).

6. Installation de chromatographie continue à contre-courant selon l'une des revendications précédentes, **caractérisée en ce que** les deux liquides respectivement le mélange de liquides sont d'une part une phase lourde et d'autre part une phase légère.

7. Installation de chromatographie continue à contre-courant selon l'une des revendications précédentes, **caractérisée en ce que** les chambres (2) sont reliées entre elles en une boucle interrompue.

8. Installation de chromatographie continue à contre-courant selon l'une des revendications précédentes, **caractérisée en ce que** les deux liquides sont amenés en continu vers les chambres (2) reliées entre elles, sur un accès (31, 32, 33, 34) respectif.

9. Installation de chromatographie continue à contre-courant selon la revendication 8, **caractérisée en ce qu'**une substance-échantillon est amenée entre ces accès, sur un autre point (35) des chambres (2) reliées formant une chaîne.

10. Installation de chromatographie continue à contre-courant selon l'une des revendications précédentes, **caractérisée en ce que** les liquides ne sont pas miscibles.

11. Installation de chromatographie continue à contre-courant selon l'une des revendications 9 ou 10, **caractérisée en ce que** le fluide ou le mélange de fluides est un solvant ou un mélange de solvants pour la substance-échantillon.

12. Installation de chromatographie continue à contre-courant selon l'une des revendications précédentes, **caractérisée en ce que** les chambres (2) sont disposées sur une orbite.

13. Installation de chromatographie continue à contre-courant selon l'une des revendications précédentes, **caractérisée en ce que** les chambres sont construites de manière identique.
